# EUROPEAN PATENT APPLICATION

(11) **EP 1 405 718 A1**
(43) Date of publication of application: **07.04.2004**
(21) Application number: 01938588.9
(22) Date of filing: 11.06.2001
(51) Int. Cl.: B32B 9/00, C03C 17/34, B01J 35/02, A47G 1/00, G02B 1/10, G02B 5/08, C09D 1/00

(54) **ANTIFOGGING ELEMENT AND METHOD FOR FORMING THE SAME**

(71) Applicant: Murakami Corporation, Shizuoka-shi, Shizuoka, 422-8569 (JP)
(72) Inventor: KOBAYASHI, Masaki, Fujieda-shi, Shizuoka 426-0037 (JP); KUZUYA, Norihiko, Fujieda-shi, Shizuoka 426-0062 (JP)
(74) Representative: Strehl Schübel-Hopf & Partner
(86) International application number: PCT/JP2001/004907
(87) International publication number: WO 2002/100633

(57) **Abstract**

In an anti-fog element comprising a substrate, a photocatalyzer film formed on the surface of the substrate, and a porous hydrophilic film formed thereon, and a process for forming the same, a titanium peroxide solution obtainable by causing a titanium peroxide gel (orthotitanic acid) to act with hydrogen peroxide is used as a material for the photocatalyzer film. When the titanium peroxide solution is used to form a photocatalyzer film, an anatase type titanium dioxide film can be obtained at a low temperature, for example, of 200°C. Consequently, in the course of the fabrication of the anti-fog element, any alkaline substance is difficult to be dispersed into the photocatalyzer film and, thus, even if a soda lime glass is used as the substrate, no film for preventing the alkali dispersion is required. For this reason, no photocatalytic property is impaired even if no film for preventing the alkali dispersion is provided. Due to the treatment at a low temperature, it is difficult for the reflecting film to be oxidized, not impairing the reflecting ratio. What is more, the treatment at a low temperature saves energy and reduces the cost, leading decreased cost.

## Description

### Technical Field

This invention relates to an anti-fog element comprising a substrate, a film of photocatalyzer catalyzing a photocatalytic reaction formed on the surface of the substrate, and a porous hydrophilic substance film formed on the surface of the photocatalyzer film, and to a process for forming the anti-fog element. Particularly, it relates to an anti-fog element, in which an alkaline component in a glass substrate is difficult to be diffused into a photocatalyzer film, and a metal film, which is a reflective film, and is also difficult to be oxidized whereby an anatase type titanium dioxide film, which comprises a photocatalyzer, can be made at a low temperature, e.g., 200°C, and a process for forming the same.

### Background Arts

International Patent Publication W096/29375 discloses the sintering of an organic titanium compound such as a titanium alkoxide, or an inorganic titanium compound such as TiCl₄ or Ti(SO₄)₂, at a temperature of from 400 to 500°C, as a starting material in order to provide an anatase type TiO₂ film having photocatalytic properties. Specifically, the process involves the addition of an organic titanium compound such as a titanium alkoxide to a hydrolysis suppressor such as hydrochloric acid or ethylamine, dilution of the mixture with an alcohol such as ethanol or propanol, the application of the mixture onto the surface of a substrate by means of any of various coating methods, while partially hydrolyzing the mixture or after the completion of the hydrolysis, and drying the system at a temperature from a normal room temperature to 200°C. The hydrolysis of the titanium alkoxide and the dehydration polycondensation provide an amorphous titanium dioxide (titania) film formed on the surface of the substrate. The sintering of the amorphous titanium dioxide film at a temperature of 400-500°C gives an anatase type TiO₂ film. Alternatively, an aqueous acidic solution of an inorganic titanium compound such as TiCl₄ or Ti(SO₄)₂ is first applied on the surface of the substrate by means of any of various coating methods. The applied inorganic titanium compound is then dried at a temperature of 100°C-200°C to cause the compound to be hydrolyzed and dehydration-polycondensed, to thereby form an amorphous titanium dioxide film on the surface of the substrate. The sintering of the amorphous titanium dioxide film at a temperature of 400-500°C gives an anatase type TiO₂ film.

On the other hand, an anti-fog element has been suggested in Japanese Patent No. 2901550 (Japanese Patent Laid-Open No. 10-36144) by the applicant of the present invention in which a porous hydrophilic substance film is formed on the outermost surface of a glass substrate to thereby impart an anti-fog property to the element through the surface hydrophilicity due to the capillary phenomenon through the pores combined with the hydrophilicity of the hydrophilic substance film, and a photocatalyzer film is formed under the hydrophilic substance film to thereby prevent the decreasing of the hydrophilicity possessed by the hydrophilic substance film, whereby the anti-fog property can be maintained over a prolonged period of time.

However, in the case where the anti-fog element suggested by the applicant is formed by the application of the technique disclosed in International Patent Publication W096/29375 mentioned above, the following problems are posed. First, if an amorphous titanium dioxide TiO₂ film is formed on a glass containing an alkali such as a soda lime glass and sintered at a temperature of 400°C to 500°C, the alkali component contained in the glass would be diffused into the TiO₂ film, impairing the photocatalytic property. Consequently, a film for preventing the diffusion should be formed between the TiO₂ film and the glass, complicating the processes and leading to higher expenses. Second, even if the TiO₂ film is formed onto a mirror (a substrate which already possesses a reflecting film), the TiO₂ film must be sintered at a temperature of 400°C to 500°C and, thus, the metal film which is the reflecting film undergoes oxidation, impairing the reflecting ratio.

### Summary of the Invention

According to the present invention, in an anti-fog element comprising a substrate, a photocatalyzer film formed on the surface of the substrate, and a porous hydrophilic film formed thereon, and a process for forming the same, a titanium peroxide solution obtainable by causing a titanium peroxide gel (orthotitanic acid) to act with hydrogen peroxide is used as a material for the photo catalyzer film. When the titanium peroxide solution is used to form a photocatalyzer film, an anatase type titanium dioxide film can be obtained at a low temperature, for example, of 200°C. Consequently, in the course of the fabrication of the anti-fog element, any alkaline substance is difficult to be dispersed into the photocatalyzer film and, thus, even if a soda lime glass is used as the substrate, no film for preventing the alkali dispersion is required. For this reason, no photocatalytic property is impaired even if no film for preventing the alkali dispersion is provided. Due to the treatment at a low temperature, it is difficult for the reflecting film to be oxidized, not impairing the reflecting ratio. What is more, the treatment at a low temperature saves energy and reduces the cost, leading decreased cost.

### Brief Description of the Drawings

Fig. 1 shows an XRD (X-ray diffraction) pattern of the TiO₂ film obtained from a titanium peroxide solution by varying the heating temperature;
Fig. 2 shows an XRD pattern of the TiO₂ film obtained from a titanium alkoxide by varying the heating temperature;
Fig. 3 is a partially cross-sectional view illustrating one embodiment of the preset invention; Fig. 4 is an enlarged cross-sectional view of Fig. 3 illustrating an anti-fog function through a porous hydrophilic substance film and a function of decomposing organic substances etc. through a photocatalyzer film;
Figs. 5 and 6 are partially cross-sectional views each illustrating another embodiment of the preset invention; and
Figs. 7 to 15 are cross-sectional views each illustrating an example where the present invention is applied to a wide variety of uses.

### Best Modes for Carrying Out the Invention

The present invention is directed to an anti-fog element comprising a substrate, a photocatalyzer film formed on the surface of the substrate, and a porous hydrophilic film formed thereon, characterized by the use of a titanium peroxide solution obtainable by causing a titanium peroxide gel (orthotitanic acid) to be acted with hydrogen peroxide as a material for the photocatalyzer film.

As the titanium peroxide solution used herein, those which contain substantially no ingredient inhibiting the formation of an anatase type titanium dioxide film at a low temperature (e.g., carbonaceous components, etc.) are preferable. A particularly preferable titanium peroxide solution consists essentially of titanium, oxygen, and hydrogen.

Generally, the solution called titanium peroxide is a sol solution of amorphous type titanium dioxide obtainable by causing titanium hydroxide gel in a gel form (orthotitanic acid) to act with hydrogen peroxide.

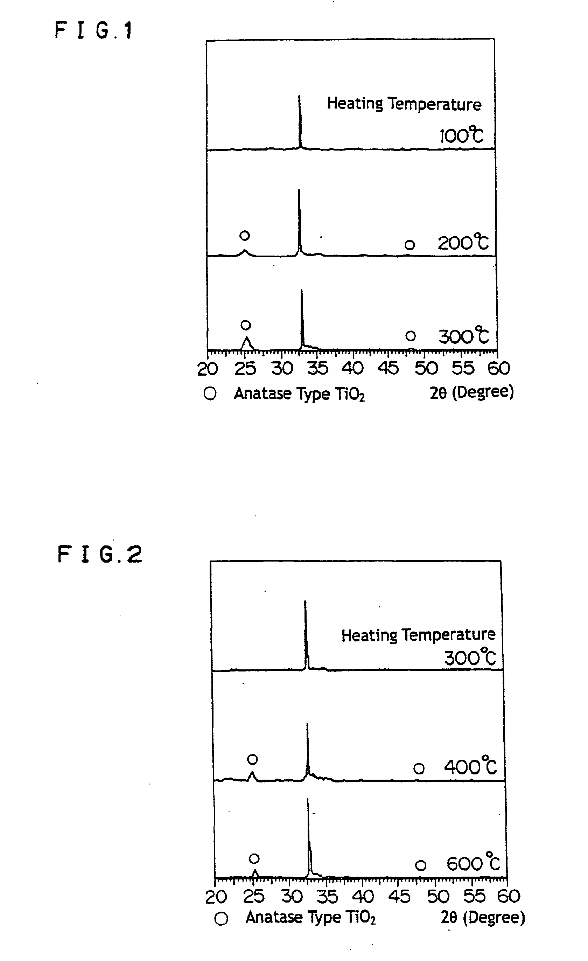

When the titanium peroxide solution is used to form a film, which is then thermally treated at a temperature of not less than 200°C, an anatase type TiO₂ film is obtained (Fig. 1). When a titanium alkoxide or such is used as a starting material, in order to obtain the anatase type TiO₂ film, a heat treatment at a temperature of 400-500°C is required (Fig. 2). Although the details of the differences between them are unknown, it would be considered that in the case of using the titanium alkoxide or such, carbonaceous components and the like remain in the film and inhibit the crystallization of TiO₂. Consequently, it would be considered the heat treatment exceeding 400°C is required in order to remove these substances and further to crystallize TiO₂. On the other hand, it would be considered that when the titanium peroxide solution is used to form a film, since only titanium, oxygen, and hydrogen are contained in the film and any substance which inhibits the crystallization is absent, the anatase type TiO₂ film can be obtained at a low temperature.

The temperature of the heat treatment is preferably in the range of from 200°C to 250°C (particularly from 200°C to 220°C) for the purpose of a low temperature treatment, and preferably in the range of from 250°C to 400°C (particularly approximately 350°C) for the purpose of obtaining a film having a high photocatalytic property and/or a dense film. Upon the treatment at a temperature of not more than 400°C, in comparison with the heat treatment at a higher temperature, it becomes difficult for the alkali components contained in the glass to be diffused, and the reflecting film is also oxidized only with difficulty.

There are a rutile type and an anatase type crystalline structure in the crystalline structure of TiO₂, it is desirable to form a TiO₂ film in an anatase type, which has a greater photocatalytic effect.

Methods for applying the titanium peroxide solution in order to form the film include spin coating, dip coating, spray coating, roll coating, flow coating, and the like.

The formation of an amorphous titanium dioxide film from the titanium peroxide can take place by drying the titanium peroxide to carry out dehydration polycondensation. The heat treatment can be carried but at the stage of forming the amorphous titanium dioxide film, after this amorphous titanium dioxide film formation stage or both at the amorphous titanium dioxide film formation stage and after the amorphous titanium dioxide film formation stage.

In the present invention, the titanium peroxide solution is used to form a film so that the thickness of the film is not less than 40 nm, and the film is treated at 200°C or greater, whereby a performance as the photocatalyzer film can be exhibited. The thickness of the photocatalyzer film is preferably in the range of from 40 to 120 nm from the viewpoint of coloration due to the interference colors.

In the present invention, the hydrophilic substance film is formed so that at least the surface thereof becomes porous. The hydrophilic substance film is preferably formed from a material having a high hydrophilicity. The hydrophilic substance film can be formed in a porous state with a coating solution containing a hydrophilic substance by applying the coating solution through an application method such as spin coating, dip coating, spray coating, roll coating, or flow coating. It is also possible to form a hydrophilic substance film such as SiO₂ in a porous state by using a PVD method such as sputtering or vacuum deposition.

The materials for the hydrophilic substances which can be used are, for example, metal oxides such as SiO₂ and Al₂O₃ which are difficult to be photocatalytically decomposed. These metal oxides, which have hydrophilic OH groups on the surface thereof, generally exhibit hydrophilicity. According to our experiments, the best hydrophilicity can be obtained from SiO₂.

In the present invention, by setting the thickness of the hydrophilic substance film at 100 nm or smaller, the electrons and positive poles produced on the photocatalyzer film can be reacted well with the oxygen and water present on the surface of the hydrophilic substance film. From the viewpoint of maintaining the anti-fog property, the thickness of the hydrophilic substance film is preferably in the range of from 10 to 100 nm.

According to the present invention, the anatase type TiO₂ film can be obtained at a low temperature, for example, at 200°C in a wet process, making the production easy and reducing the cost.

Next, preferred embodiments of the anti-fog element according to the present invention will be described.

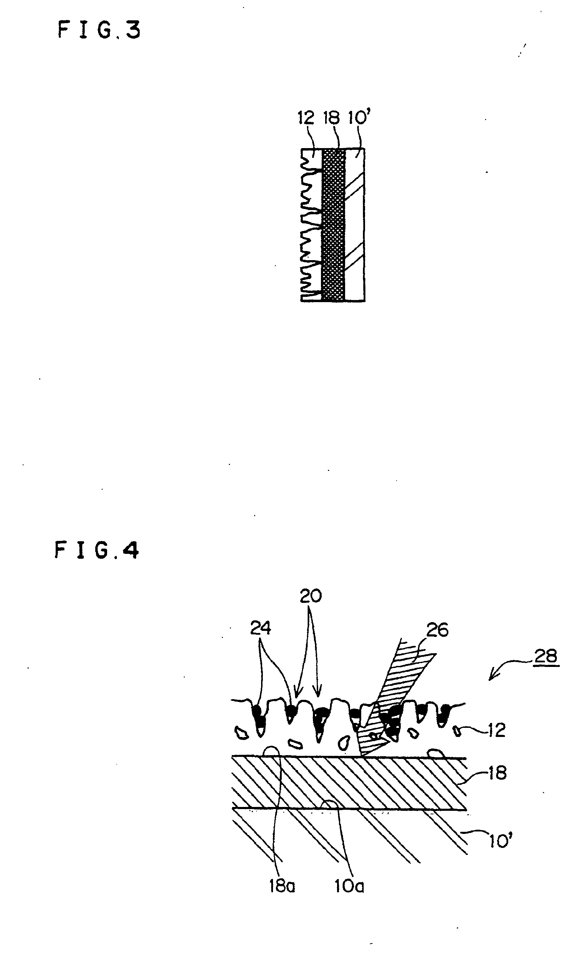

Fig. 3 shows an anti-fog element comprising a substrate 10', a photocatalyzer film 18 formed on the substrate 10' by utilizing a titanium peroxide solution, and a hydrophilic substance film 12 further formed thereon. When the titanium peroxide solution is formed into a film at 200°C or more, an anatase type TiO₂ film having a photocatalytic property can be provided.

According to the configuration shown in Fig. 3, since the hydrophilic substance film 12 residing at the surface is formed in a porous state as shown in the partially enlarged cross-sectional view of Fig. 4, the anti-fog element has enhanced surface wettability, exhibits hydrophilicity, and thus, spreads out adhered water droplets in a thin film state, exhibiting an anti-fog effect. Consequently, applying the anti-fog element to an automobile outer mirror, a bathroom mirror, automobile window, windowpane, or the like, it becomes difficult for the water droplets to be adhered into a globular form and, thus, a much better view can be obtained. When organic substances etc. 24 including organic substances such as wax and organic substances in the atmosphere and NOₓ enter into an openings 20, a ray 26 of light such as sunlight or other light (such as ultraviolet ray) penetrates the hydrophilic substance, is radiated on the photocatalyzer film 18 to optically excite the photocatalyzer film 18. This optical excitation produces a pair of electrons and positive holes within the photocatalyzer film 18. The produced electrons and positive holes penetrate the hydrophilic substance film 12 and are reacted with oxygen and water present on the surface of the hydrophilic substance film 12 to thereby produce superoxide anions (O²⁻) and hydroxy radicals (•OH). The produced O²⁻ and •OH have strong oxidation power, and are reacted with the organic substances etc. 24 adhered onto the openings 20 to oxidatively decompose and remove the organic substances etc. 24. Consequently, this prevents the decreasing of the hydrophilicity, making it possible to maintain the anti-fog property over a prolonged period of time.

It is noted that a good photocatalytic reaction can be provided if the openings of the pores of the porous hydrophilic substance film are configured to be pierced through to the surface of the photocatalyzer film so that the organic substances and NOₓ entering into the openings of the pores come directly into contact with the photocatalyzer film. However, in the case where the hydrophilic substance film is SiO₂, even if the openings of the pores are not pierced through to the surface of the photocatalyzer film (i.e., the openings are blocked on the way to the surface of the photocatalyzer film), since the light (in the case of TiO₂, mainly ultraviolet ray) penetrates the transparent, porous hydrophilic substance film, and since the electrons and positive holes produced on the photocatalyzer film can also penetrate the porous hydrophilic substance film if the film is thin, the organic substances and NOₓ entering into the openings of the pores can be decomposed and removed by the photocatalyst reaction.

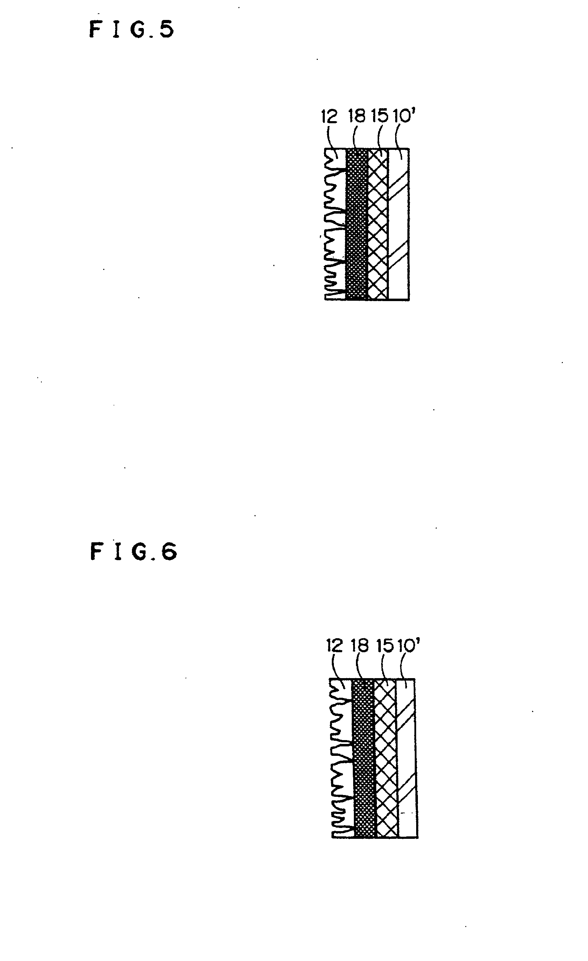

Fig. 5 shows a drawing in which an intermediate film 15 is formed between the surface of the substrate 10' and the photocatalyzer film 18. An example of the intermediate film includes a silicone thin film in the case where the substrate is based on an organic material. This film is a protective film so that the substrate does not undergo any damage due to the photocatalytic function of the photocatalyzer film. In addition, in the case where the substrate is based on a soda lime glass, which would involves a heat treatment stage at a high temperature exceeding 400°C, an SiO₂ film serving as a film for preventing the diffusion of alkali can be exemplified.

Fig. 6 shows a drawing in which an intermediate film 15 comprising a metal reflecting film is formed between the surface of the substrate 10' and the photocatalyzer film to configure an anti-fog mirror.

While, the films are formed on one surface in all of the embodiments shown in Figs. 3 to 6, the present invention is not restricted thereto.

### EXAMPLES

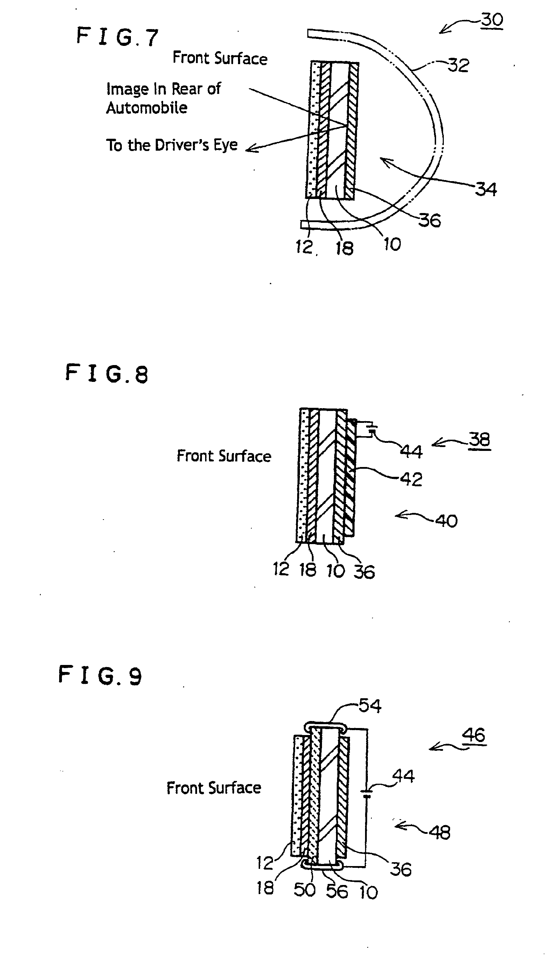

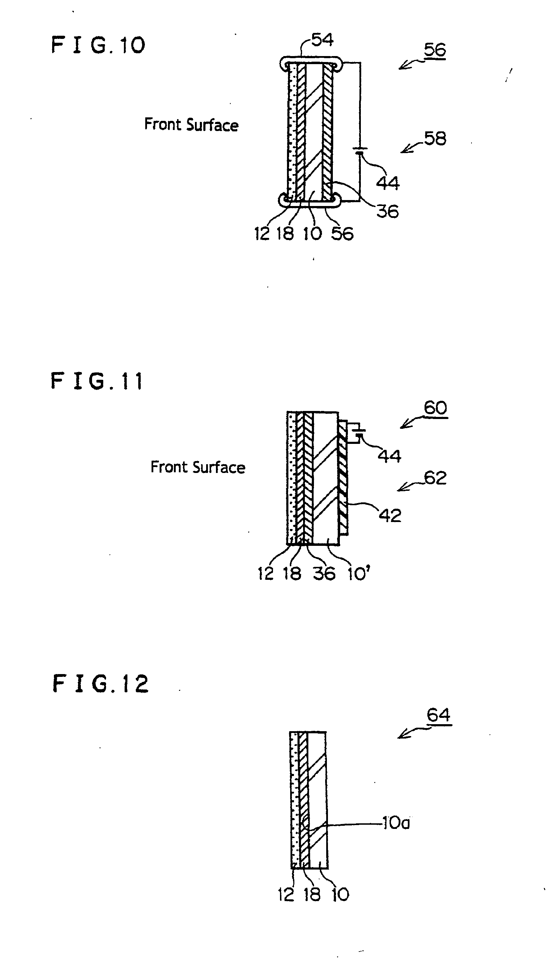

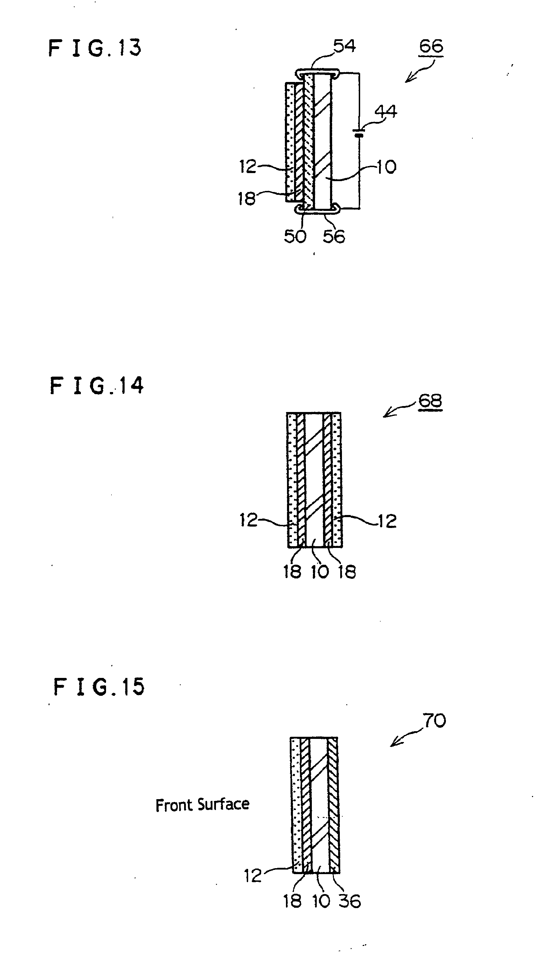

Various Examples of this invention will now be described, where Examples 1 to 5 (Figs. 7 to 11) are examples in which the present invention is applied to an automobile outer mirror (Figs. 8 to 11 are shown with the mirror body being omitted), Examples 6 to 8 (Figs. 12 to 14) are examples in which the present invention is applied to an automobile window (the same is the case when the present invention is applied to window panes of a building), and Example 9 (Fig. 15) is an example in which the present invention is applied to a bathroom mirror.

Film forming conditions in Examples are as follows:
- Substrate: Soda Lime Glass
- Photocatalyzer Film:

| | |
|---|---|
| Material | Trade Name TK Available from TAO Co., Ltd. (Titanium peroxide solution) |
| Film Forming Temperature | 200°C |
| Film Thickness | 75 nm |

- Hydrophilic Substance Film:

| | |
|---|---|
| Material | Trade Name of N-103X available from COLCOAT CO., LTD. (SiO₂ coating agent) |
| Film Forming Temperature | 25°C |
| Film Thickness | 20 nm |

### (1) Example 1 (Fig. 7)

An automobile outer mirror 30 is configured as a door mirror or a fender mirror. The outer mirror 30 possesses a mirror body 32 having a mirror assembly 34 accommodated therein. The mirror assembly 34 is composed of a transparent glass substrate 10 having a TiO₂ film 18 and a porous SiO₂ film 12 formed on the front surface of the glass substrate 10, and a reflecting film 36 such as Cr or Al film formed on the rear surface of the glass substrate 10. The image behind the automobile penetrates through the SiO₂ film 12, the TiO₂ film 18 and the transparent glass substrate 10, and is reflected upon the reflecting film 36 to be led to the driver's eye via a reverse path. Organic substances etc., entering into the openings of the pores of the SiO₂ film 12 and then adhered therein are decomposed by the oxidation-reduction reaction cause by the photocatalytic reaction on the TiO₂ film 18.

### (2) Example 2 (Fig. 8)

A mirror assembly 40 of an automobile outer mirror 30 is composed of a transparent glass substrate 10 having a TiO₂ film 18 and a porous SiO₂ film 12 formed on the front surface of the glass substrate 10, and a reflecting film 36 such as Cr or Al film formed on the rear surface of the glass substrate 10. Over substantially the entire area of the rear surface of the reflecting film 36, a panel-like heater 42 is bonded by mean of an adhesive or a bonding agent. Current is supplied to the panel-like heater from a power source 44. If the panel-like heater 40 comprises, for example, a PTC (positive characteristic thermistor) panel heater, it can be directly driven by an automobile battery and, thus, no temperature control circuit or the like is required. The PTC panel heater is composed of a polymeric sheet-like heating element having PCT characteristics imparted thereto (for example, electrically conductive resin in which electrodes made of e.g. silver or copper are provided and which is laminated by a PET film) and the like. The water droplets spread over the SiO₂ film in a thin film state are heated by the panel-like heater 42, whereby the water droplets can be effectively removed (evaporated).

### (3) Example 3 (Fig. 9)

A mirror assembly 48 of an automobile outer mirror 46 is composed of a transparent glass substrate 10 having a transparent electrode film 50 such as ITO as a heating element, a TiO₂ film 18 and a porous SiO₂ film 12 formed on the front surface of the glass substrate 10 in this order, and a reflecting film 36 such as Cr or Al film formed on the rear surface of the glass substrate 10. Clip electrodes 54 and 56 are mounted in the upper and lower portions of the laminated transparent glass substrate 10 and the transparent electrode film 50. By supplying current from a power source 44 to the transparent electrode film 50, the transparent electrode 50 is heated to effectively remove the water droplets spread over the SiO₂ film 12 in a thin film state.

### (4) Example 4 (Fig. 10)

A mirror assembly 58 of an automobile outer mirror 56 is composed of a transparent glass substrate 10 having a TiO₂ film 18 and a porous SiO₂ film 12 formed on the front surface of the glass substrate 10, and a reflecting film 36 such as Cr or Al film formed on the rear surface of the glass substrate 10. Clip electrodes 54 and 56 are mounted in the upper and lower portions of the laminated transparent glass substrate 10 and the transparent electrode film 50. By supplying current from a power source 44 to the reflecting film 36 (also serving as a heating element), the reflecting film 36 is heated to effectively remove the water droplets spread over the SiO₂ film 12 in a thin film state.

### (5) Example 5 (Fig. 11)

An automobile outer mirror 60 is configured as a surface mirror (a reflecting film is formed on the front surface of the substrate member). A mirror assembly 62 is composed of a glass substrate 10' (not required to be transparent) having a reflecting film 36 such as Cr or Al film, a TiO₂ film, and a porous SiO₂ film 12 formed on the front surface of the glass substrate 10 in this order, and a panel-like heater 42 adhered or bonded onto the rear surface of the glass substrate 10'. The panel-like heater 42 is heat by supplying current from a power source 42 to the panel-like heater 42. Similar to Fig. 10, instead of the panel-like heater 42, the reflecting film 36 itself may be used as the heating element.

### (6) Example 6 (Fig. 12)

An automobile window 64 is composed of a transparent glass substrate 10 which totally makes up the widow glass main body, having a TiO₂ film and a porous SiO₂ film 12 formed on one surface (either outside surface of the automobile or inside surface of the automobile) thereof in a totally transparent state (with or without color). If the TiO₂ film and the porous SiO₂ film 12 are formed on the outside surface of the automobile, an effect for removing raindrops etc. can be obtained. If they are on the inside surface of the automobile, an effect for removing water droplets such as due to condensed water can be obtained.

### (7) Example 7 (Fig. 13)

An automobile window 64 is composed of a transparent glass substrate 10a which totally makes up the widow glass main body, having a transparent electrode film 50 such as ITO, a TiO₂ film and a porous SiO₂ film 12 formed on one surface (either outside surface of the automobile or inside surface of the automobile) thereof in this order in a totally transparent state. Clip electrodes 54 and 56 are mounted in the upper and lower portions of the laminated transparent glass substrate 10a and the transparent electrode film 50. By supplying current from a power source 44 to the transparent electrode film 50, the transparent electrode 50 is heated to effectively remove the water droplets spread over the SiO₂ film 12 in a thin film state.

### (8) Example 8 (Fig. 14)

An automobile window 68 is composed of a transparent glass substrate 10 having TiO₂ films and porous SiO₂ films 12 formed on both surfaces thereof and exhibits anti-fog property on both surfaces. A transparent electrode film can be disposed between the surface of the transparent glass substrate 10 and the TiO₂ film 18.

### (9) Example 9 (Fig. 15)

A bathroom mirror 70 is composed of a transparent glass substrate 10 having a TiO₂ film 18 and a porous SiO₂ film 12 formed on the front surface of the glass substrate 10, and a reflecting film 36 such as Cr or Al film formed on the rear surface of the glass substrate 10. A heating element (such as panel heat, e.g., PTC) can be disposed on the rear surface of the reflecting film 36, or a transparent electrode film can be disposed between the surface of the transparent glass substrate 10 and the TiO₂ film 18.

While the substrate member is composed of the glass substrate in the examples described above, the substrate may be based on any material other than glass (such as a plastic or metal).

### Industrial Applicability

The anti-fog element according to this invention can be configured as an automobile window or a windowpane for a building by using a transparent material such as a transparent glass substrate as a material of the substrate. In this case, a photocatalytic reaction occurs with a sunbeam. Since the photocatalyzer (TiO₂) has a function of absorbing a ultraviolet light, an effect of cutting a ray of ultraviolet can also be obtained. If the anti-fog film is formed on the outside surface of the room (automobile), an effect for removing raindrops etc. can be obtained, while if it is formed on the inside surface of the room (automobile), an effect for removing water droplets such condensed water can be obtained. Anti-fog elements can be formed on both of the inside and outside surfaces.

By forming a reflecting film on the substrate, the anti-fog element of this invention can be configured as an automobile outer mirror or a bathroom mirror. In the case of the automobile outer mirror, a photocatalytic reaction occurs with sunlight. In the case of the bathroom mirror, a photocatalytic reaction occurs with an ultraviolet ray irradiated from a fluorescent light or such.

## Claims

1. An anti-fog element comprising a substrate, a photocatalyzer film formed on the surface of the substrate, and a porous hydrophilic film formed thereon,
a titanium peroxide solution obtainable by causing a titanium peroxide gel (orthotitanic acid) to act with hydrogen peroxide being used as a material for the photocatalyzer film.

2. The anti-fog element as claimed in Claim 1, wherein said photocatalyzer film is an anatase type titanium dioxide obtained by a heat treatment not less than 200°C and not greater than 400°C.

3. The anti-fog element as claimed in Claim 1 or 2, which has an intermediate film between the surface of said substrate and said photocatalyzer film.

4. The anti-fog element as claimed in any one of Claims 1 to 3, wherein said hydrophilic substance film is a transparent inorganic oxide film.

5. The anti-fog element as claimed in any one of Claims 1 to 4, which is transparent in its entirety and is configured as an automobile window.

6. The anti-fog element as claimed in any one of Claims 1 to 5, wherein said substrate is transparent and which further comprises a reflecting film formed on the rear surface of the transparent substrate to form an anti-fog mirror.

7. The anti-fog element as claimed in any one of Claims 1 to 6, which comprises a reflecting film formed on the rear surface of the substrate, a transparent photocatalyzer film catalyzing a photocatalytic reaction formed on the surface of the substrate, and a transparent hydrophilic substance film formed thereon in a porous state to form an anti-fog mirror having a hydrophilic surface.

8. The anti-fog element as claimed in Claim 6 or 7, which is configured as an automobile outer mirror.

9. A process for forming an anti-fog element comprising a substrate, a photocatalyzer film formed on the surface of the substrate, and a porous hydrophilic film formed thereon,
using a titanium peroxide solution obtainable by causing a titanium peroxide gel (orthotitanic acid) to act with hydrogen peroxide as a material for the photocatalyzer film.

10. The process for forming an anti-fog element as claimed in Claim 9, wherein said substrate is a soda lime glass, and after a reflecting film is formed on the front or rear surface of the substrate, said photocatalyzer film is formed, and thermally treated at a temperature not less than 200°C and not greater than 400°C.
